Europäisches Patentamt

European Patent Office

Office européen des brevets

(11) Numéro de publication : **0 337 887 B1**

## (12) FASCICULE DE BREVET EUROPEEN

(45) Date de publication du fascicule du brevet :
28.06.95 Bulletin 95/26

(51) Int. Cl.⁶ : **F17D 1/04, F16K 27/00**

(21) Numéro de dépôt : **89401019.8**

(22) Date de dépôt : **13.04.89**

(54) **Poste de détente intégré multifonctions pour l'alimentation en gaz d'un réseau secondaire.**

(30) Priorité : **14.04.88 FR 8804961**

(43) Date de publication de la demande :
**18.10.89 Bulletin 89/42**

(45) Mention de la délivrance du brevet :
**28.06.95 Bulletin 95/26**

(84) Etats contractants désignés :
**AT BE CH DE ES FR GB GR IT LI LU NL SE**

(56) Documents cités :
**FR-A- 2 315 051
FR-A- 2 473 748
GB-A- 2 024 650**

(73) Titulaire : **GAZ DE FRANCE (SERVICE NATIONAL)
23 rue Philibert-Delorme
F-75017 Paris (FR)**

(72) Inventeur : **Cornil, Jean-Philippe
38 Bis, rue Desaix
F-78800 Houilles (FR)**

(74) Mandataire : **Thévenet, Jean-Bruno et al
Cabinet Beau de Loménie
158, rue de l'Université
F-75340 Paris Cédex 07 (FR)**

## Description

La présente invention concerne un poste de détente intégré multifonctions pour l'alimentation en gaz d'un réseau secondaire d'utilisation à partir d'un réseau principal de distribution.

L'invention a plus particulièrement pour objet un poste de détente intégré multifonctions comprenant un corps externe unique conçu pour résister à la pression de service du gaz, dans lequel sont disposés les éléments actifs d'au moins un filtre, un régulateur de pression et une vanne de sécurité, le corps externe unique comprenant une paroi latérale de forme essentiellement cylindrique, des première et seconde culasses étant montées aux extrémités frontales du corps externe unique, une paroi transversale de séparation et de support sensiblement parallèle aux première et seconde culasses étant montée à l'intérieur du corps unique pour définir des première et seconde chambres et le corps externe unique étant muni d'une bride d'entrée rattachée à une vanne d'entrée et définissant un orifice d'entrée qui débouche dans ladite première chambre et d'une bride de sortie rattachée à une vanne de sortie et définissant un orifice de sortie qui prend naissance dans ladite seconde chambre.

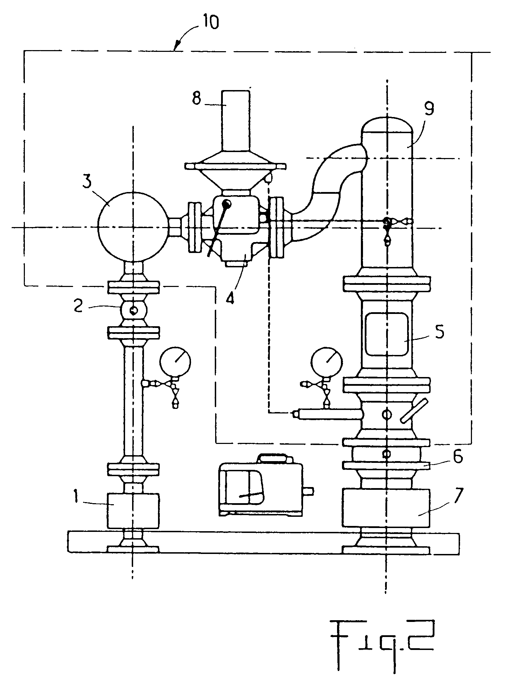

Un poste de détente et de comptage de gaz de type classique qui est raccordé à un réseau principal 1 de distribution de gaz pour alimenter un réseau secondaire 7, lequel peut d'ailleurs être constitué par une simple conduite d'alimentation d'un appareillage fonctionnant au gaz, est représenté sur le schéma de la figure 2. Un tel poste de détente comprend essentiellement une vanne d'entrée 2, un filtre 3, une vanne de sécurité 4, un régulateur de pression 8 utilisant en général un corps commun avec la vanne de sécurité 4, des canalisations de liaison 9, un compteur 5 de débit de gaz, et une vanne de sortie 6.

Chacun de ces éléments doit répondre à des exigences de tenue mécanique par rapport à la pression de service, et à des exigences dimensionnelles relatives au débit qui doit transiter dans le poste.

Ces éléments sont d'une façon générale montés en série dans un ordre immuable et le bon fonctionnement de certains, tel que le compteur 5, nécessite des canalisations de liaison 9 de longueur suffisante pour éviter les interactions possibles entre les divers éléments.

La prise en compte de tous ces facteurs conduit à la réalisation de postes de détente d'un encombrement non négligeable lorsqu'ils sont construits à partir de techniques traditionnelles.

On a par ailleurs proposé, dans le document GB-A-2024650 ou le document FR-A-2 473 748 de réaliser un poste de détente comprenant dans une même enceinte étanche des régulateurs, des filtres et une vanne de sécurité alignés axialement les uns par rapport aux autres. Cette disposition axiale d'éléments disposés en cascade conduit à réaliser une enceinte de relativement grande hauteur. Par ailleurs, le poste de détente décrit dans ces documents GB-A-2 024 650 ou FR-A-2 473 748 ne comprend aucun moyen de comptage ou mesure de débit. L'adjonction d'un compteur implique là encore la mise en oeuvre de canalisations de liaison de longueur substantielle. En effet, les fortes perturbations qui existent à proximité du clapet de détente du régulateur de pression conduisent à placer le dispositif de comptage de débit de gaz à une distance par rapport au régulateur correspondant à plusieurs fois le diamètre de la canalisation qui réunit ces deux éléments. Ceci conduit à un encombrement non négligeable. De plus, les conduites de liaison reliant un régulateur de pression à un compteur tel qu'un compteur à turbine ajoutent généralement aux perturbations engendrées par le régulateur des perturbations supplémentaires dues au profil particulier des canalisations de liaison et aux accessoires éventuellement montés sur ces conduites de liaison. Le compteur de débit peut ainsi recevoir un flux de gaz dont le profil de vitesse est déformé ou qui subit des rotations de la veine gazeuse, ce qui est préjudiciable pour la qualité du comptage. Par ailleurs, dans la réalisation préconisée par les documents GB-A-2 024 650 ou FR-A-2 473 748, les éléments pouvant nécessiter un remplacement, tels que les filtres, sont difficilement accessibles lors des opérations de maintenance et impliquent le retrait de la totalité des éléments disposés dans l'enceinte étanche.

On a également proposé, notamment par le document de brevet FR-A-2 341 131, de réaliser un appareil régulateur-compteur intégré qui permette à la fois de réguler une pression et de compter le débit transitant à travers cet appareil. La mise en oeuvre d'un tel appareil dans un poste de détente, bien que particulièrement avantageuse, implique néanmoins de réaliser pour chaque gamme de pressions de service un appareil dont le corps soit adapté à cette gamme de pressions. Par ailleurs, la juxtaposition d'un filtre, d'un régulateur-compteur intégré et d'un dispositif de sécurité au sein d'un poste de détente implique toujours de mettre en oeuvre une succession d'éléments d'encombrement important et dont chacun doit être dimensionné de façon spécifique et doit répondre à la pression de service.

La plupart des postes de détente de gaz connus impliquent par ailleurs, de déposer l'ensemble de la ligne de conduite de gaz entre les vannes d'entrée et de sortie du poste de détente et donc de procéder à des opérations de débridage du corps des divers éléments constitutifs, ce qui rend les opérations de démontage et remontage longues et délicates.

La présente invention vise à remédier aux inconvénients précités et à permettre la réalisation de postes de détente de gaz plus compacts, dont la fabrication et la maintenance sont simplifiées, qui présentent dans leur conception et leur utilisation un caractère plus universel que les postes de détente connus et qui de plus intègrent une fonction de comptage de débit sans affecter la compacité du poste.

Ces buts sont atteints grâce à un poste de détente du type défini dans le préambule de la revendication 1, qui, conformément à l'invention, est caractérisé en ce que ladite première culasse et ladite première chambre constituent respectivement une culasse supérieure et une chambre supérieure par rapport à la paroi transversale de séparation et de support tandis que ladite seconde culasse et ladite seconde chambre constituent respectivement une culasse inférieure et une chambre inférieure par rapport à la paroi transversale de séparation et de support, en ce qu'il comprend en outre un compteur de débit monté sur ladite paroi transversale, en ce que le filtre est constitué par une cartouche cylindrique disposée entre la culasse supérieure et le régulateur de pression, lui-même monté sur ladite paroi transversale et en ce que la vanne de sécurité est montée sur la culasse supérieure et comporte un clapet de sécurité disposé en amont du régulateur de pression à la partie supérieure de celui-ci et à l'intérieur du filtre de forme cylindrique.

Selon un premier mode de réalisation possible, le poste de détente comprend un régulateur piloté disposé sensiblement axialement à l'intérieur du corps externe dans ladite chambre supérieure, avec un clapet de sortie et un siège de clapet de sortie définissant un écoulement de gaz essentiellement radial, un redresseur d'écoulement disposé immédiatement en aval du clapet de sortie du régulateur piloté pour réorganiser l'écoulement de gaz selon une direction axiale et un compteur de débit séparé disposé immédiatement en aval du redresseur d'écoulement.

Dans ce cas, le redresseur d'écoulement comprend une plaque perforée qui constitue également un support pour le siège du clapet de sortie du régulateur piloté, et un élément constitué par un matériau poreux et disposé immédiatement en aval de la plaque perforée.

La plaque perforée comprend un ensemble d'orifices présentant chacun une section de passage de l'ordre de 3 à 30 mm2 et la section totale de passage utile des orifices de la plaque perforée est équivalente à la section de passage du clapet de sortie du régulateur en position de pleine ouverture, de telle sorte qu'il se produit un étagement de la détente du gaz entre le clapet de sortie du régulateur et le redresseur d'écoulement.

Au sein du redresseur d'écoulement l'élément en matériau poreux présente une perte de charge du même ordre de grandeur que celle de la plaque perforée.

Avantageusement, l'élément en matériau poreux présente une face de sortie concave de forme hémisphérique.

La présence d'un redresseur d'écoulement intégré à la sortie du régulateur de pression permet une réorganisation de l'écoulement gazeux qui passe du sens radial au sens axial et présente en sortie un profil de vitesse homogène.

Le redresseur d'écoulement, en participant à la détente du gaz, contrairement au cas des redresseurs connus pour lesquels on recherche une perte de charge minimale, permet un étagement de la détente ce qui limite l'effet des ondes de choc qui accompagnent les détentes en régime sonique.

Le redresseur d'écoulement contribue également à assurer une atténuation sensible du bruit lié à la détente.

La présence d'un redresseur d'écoulement intégré immédiatement à la sortie du régulateur permet ainsi de disposer un organe de comptage de débit, tel qu'une turbine, immédiatement à la sortie du redresseur et supprime ainsi la nécessité d'une canalisation entre régulateur et compteur, ce qui permet d'éliminer tous les inconvénients mentionnés plus haut qui sont liés à la présence d'une telle canalisation.

Selon une caractéristique particulière, permettant de changer facilement le calibre du compteur et donc d'adapter celui-ci au mieux aux conditions de débit optimal de l'installation, le compteur de débit est monté à l'intérieur d'une chemise cylindrique amovible présentant une section externe de dimensions standardisées adaptée pour s'engager dans un cylindre de support de compteur de débit monté sur ladite paroi transversale.

Avantageusement, le poste de détente intégré selon l'invention comprend en outre un dispositif piloté d'introduction sélective d'une perte de charge disposé dans la chambre inférieure entre le compteur de débit et l'orifice de sortie pour introduire une perte de charge réagissant sur la vitesse du gaz circulant dans le compteur de débit afin d'accroître la dynamique du compteur.

Dans ce cas, le poste de détente peut comprendre un dispositif électronique correcteur auquel sont appliqués des signaux d'information délivrés respectivement par un détecteur de débit associé au compteur de débit, par un capteur de la pression dans la chambre inférieure et par un capteur de la température dans la chambre inférieure. Le dispositif électronique correcteur comprend des moyens pour déterminer le débit réel corrigé en fonction du débit mesuré, de la pression, de la température et du coefficient de compressibilité du gaz, des moyens pour comparer le débit réel corrigé à une valeur de seuil mémorisée correspondant à un débit maximal autorisé pour le compteur de débit, et des moyens pour n'autoriser une mise en service d'un pilote pneumatique de commande du dispositif piloté d'introduction sélective d'une perte de charge que lorsque le débit réel corrigé dépasse ladite valeur de seuil mémorisée.

Selon une variante de réalisation, le poste de détente comprend un dispositif pneumatique différentiel qui mesure en permanence la perte de charge naturelle du compteur, compare celle-ci à une perte de charge de référence correspondant au débit maximal autorisé, et commande l'actionnement du dispositif piloté d'introduction sélective d'une perte de charge lorsque la perte de charge mesurée dépasse la perte de charge de référence.

Conformément à un deuxième mode de réalisation de la présente invention, le poste de détente intégré multifonctions comprend un régulateur-compteur intégré à pression pilote équipé d'une tuyère définissant avec un clapet en forme d'ogive un col de section variable dont l'écoulement est parallèle à l'axe du corps unique.

Avantageusement, le poste de détente comprend en outre un dispositif piloté de réduction sélective de pression disposé dans la chambre supérieure à l'intérieur du filtre de forme cylindrique entre le clapet de sécurité et le régulateur-compteur intégré afin d'accroître la dynamique de ce dernier.

Dans ce cas, le poste de détente comprend un calculateur de débit auquel sont appliqués des signaux représentatifs des paramètres de fonctionnement du régulateur-compteur intégré, et qui surveille en permanence la section d'ouverture du col du régulateur-compteur intégré pour n'autoriser la mise en service d'un pilote pneumatique de commande du dispositif piloté de réduction sélective de pression que lorsque la section d'ouverture dudit col est descendue en dessous d'une valeur de seuil prédéterminée.

Le poste de détente selon l'invention est adapté à divers systèmes de commande.

Ainsi, dans le cas du mode de réalisation comprenant un régulateur-compteur intégré, avantageusement le poste de détente comprend au moins un capteur de la pression pilote de commande du régulateur-compteur, un capteur de la pression amont du gaz, un capteur de la pression aval du gaz, un capteur de la température amont du gaz, un capteur de la position relative des pièces définissant la tuyère à col de section variable et un calculateur, et le calculateur comprend d'une part des moyens pour déterminer le débit de gaz à travers le régulateur-compteur intégré à partir des informations fournies par les capteurs de pression amont, de température amont et de position relative des pièces définissant la tuyère à col de section variable, et d'autre part des seconds moyens pour commander l'actionnement de la vanne de sécurité en fonction de la valeur du débit calculée par les premiers moyens, et des informations fournies par les capteurs de la pression aval et de la pression pilote.

D'autres caractéristiques et avantages de l'invention ressortiront de la description suivante de modes particuliers de réalisation, faite en référence aux dessins annexés, sur lesquels :

- la figure 1 est une vue en coupe axiale d'un poste de détente intégré multifonctions selon un premier mode de réalisation de la présente invention, selon lequel le régulateur piloté et le compteur de débit sont des organes séparés,
- la figure 2 est une vue en élévation d'un poste de détente classique,
- la figure 3 est une vue partielle en coupe axiale d'une variante de réalisation d'un poste de détente selon la figure 1, dans lequel le compteur de débit est monté dans un chemisage d'adaptation,
- la figure 4 est une vue en coupe axiale d'un poste de détente selon le mode de réalisation de la figure 1 qui est équipé en outre d'un dispositif pilote d'introduction sélective d'une perte de charge en aval du compteur de débit,
- la figure 5 est une vue en coupe axiale d'un poste de détente intégré multifonctions selon un deuxième mode de réalisation de l'invention, dans lequel il est mis en oeuvre un régulateur-compteur intégré,
- la figure 6 est une vue en coupe axiale d'une variante de réalisation du poste de détente selon la figure 5, et dans lequel les orifices d'entrée et de sortie de gaz sont montés en ligne,
- la figure 7 est une vue en coupe axiale d'un poste de détente selon le mode de réalisation de la figure 5 qui est équipé en outre d'un dispositif piloté de réduction sélective de pression disposé en amont du régulateur-compteur, et
- la figure 8 est un schéma synoptique d'un exemple de système de commande d'un poste de détente intégré multifonctions selon l'invention.

Si l'on considère à nouveau la figure 2 qui concerne un poste de détente classique, on constate que toute la partie 10 constituée par les éléments montés en série entre la vanne d'entrée 2 et la vanne de sortie 6 est très volumineuse et constituée par le montage en série d'une succession d'éléments 3, 4, 8, 9 et 5 qui doivent chacun être conçus de manière à pouvoir résister à la pression de service. Ainsi, dans un poste de détente classique, chacun des éléments constitutifs doit présenter un corps extérieur qui doit être conçu et contrôlé de manière à pouvoir résister à une pression relativement importante. La multiplication des contrôles est évidemment un inconvénient.

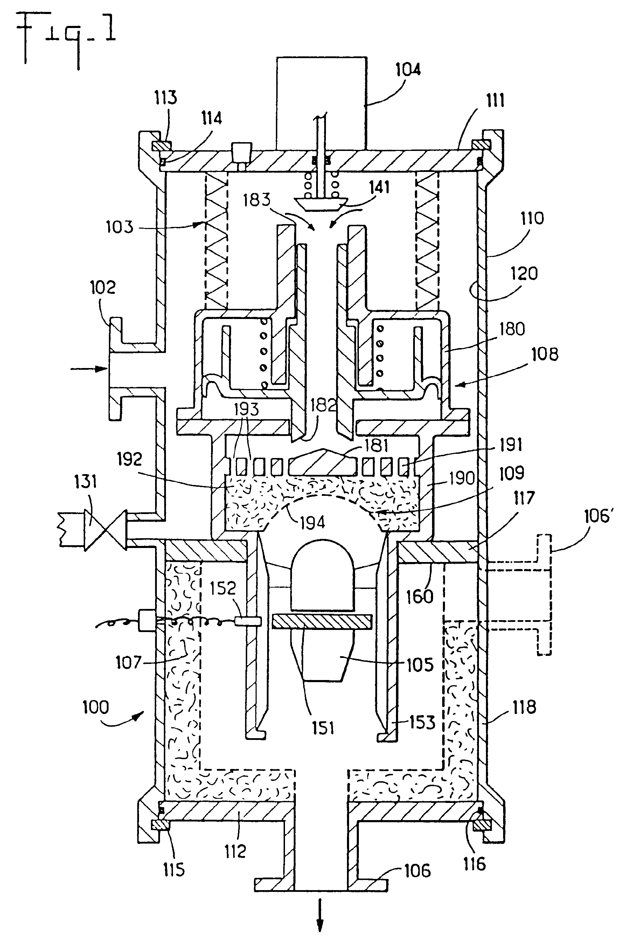

Par ailleurs, la mise en oeuvre d'un régulateur, tel que le régulateur 8 crée en aval des fronts de vitesse non homogènes. Pour retrouver une répartition spatiale homogène des vitesses à l'entrée d'un compteur de débit séparé, tel que le compteur 5, il est nécessaire de prévoir des éléments de liaison 9 d'une longueur suffisante entre le régulateur 8 et le compteur 5. Les postes de détente et de comptage classiques restent ainsi volumineux et coûteux, sans compter les difficultés de maintenance, dans la mesure où il est chaque fois nécessaire de procéder à des débridages lorsque l'un des éléments constitutifs du sous-ensemble 10 doit être changé, vérifié, ou réétalonné. Le poste de détente intégré multifonctions représenté sur la figure 1 permet l'utilisation d'éléments de régulation et de comptage classiques, tout en facilitant l'assemblage, le démontage pour les besoins de la maintenance, et en augmentant fortement la compacité de l'ensemble.

Le poste de détente 100 représenté sur la figure 1 correspond au sous-ensemble 10 de la figure 2 et se raccorde d'une part à la vanne d'entrée 2 et d'autre part à la vanne de sortie 6. Le poste de détente 100 comprend un corps extérieur 110 qui constitue une enveloppe capable de résister à la pression de service et comprend essentiellement une paroi latérale 118 de forme à peu près cylindrique et qui peut correspondre par exemple à la paroi latérale du corps d'un filtre classique. Les faces frontales du corps 110 sont obturées par des première et seconde culasses 111, 112 qui sont rapportées de façon étanche, grâce à la présence de joints 114, 116, aux extrémités de la paroi latérale 118 et sont verrouillées par des éléments de blocage 113, 115 qui peuvent être facilement ôtés pour permettre le retrait des culasses amovibles 111, 112 lorsqu'il est nécessaire d'avoir accès à l'intérieur du corps 110 pour procéder au retrait de l'un des éléments actifs présents dans ce corps 110.

Une paroi de séparation 117 sensiblement parallèle aux culasses d'extrémité 111, 112 est fixée sur la paroi latérale 118 du corps 110, à l'intérieur de celui-ci pour définir deux chambres distinctes 120, 160.

Une bride prévue pour se raccorder sur la vanne d'entrée 2 est montée sur la paroi latérale 118 du corps 110 pour définir un orifice d'entrée 102 dans la chambre supérieure 120 du poste de détente. Une bride destinée à se raccorder sur une vanne de sortie 6 est de même formée dans la culasse inférieure 112 du corps 110 pour définir un orifice de sortie 106 communiquant avec la seconde chambre 160, dans le cas où l'orifice de sortie doit être placé en équerre par rapport à l'orifice d'entrée 102. A titre de variante, l'orifice de sortie 106′ peut être formé dans la paroi latérale 118 du corps 110 de manière à communiquer avec la chambre inférieure 160 et définir des orifices d'entrée 102 et de sortie 106′ décalés (représentation en pointillés sur la figure 1).

Un régulateur piloté classique 108 est monté sur la paroi de séparation 117 dans la première chambre 120 et comporte une entrée 183 formant siège de clapet qui coopère avec un clapet de sécurité 141 faisant partie d'une vanne de sécurité 104 montée sur la culasse amovible supérieure 111. Le régulateur piloté 108 peut être de conception tout à fait classique, avec un clapet de sortie 182 mais, du fait qu'il se trouve en équipression par la présence du corps extérieur 110, il n'est pas nécessaire que le régulateur 108 comporte lui-même un corps 180 dont la tenue mécanique soit prévue pour résister à la pression de service. Le régulateur 108 peut donc être réalisé de façon plus simple et avec un encombrement réduit.

Une cartouche filtrante 103 de forme cylindrique est disposée entre le régulateur 108 et la culasse supérieure 111 qui porte la vanne de sécurité 104. Une vanne 131 de purge du filtre 103 est disposée dans la paroi latérale 118 du corps 110 au niveau de la paroi de séparation 117. Le clapet 141 de la vanne de sécurité 104 et le siège de clapet 183 sont disposés dans l'espace libre ménagé à l'intérieur de la cartouche filtrante 103, ce qui permet d'accroître la compacité de l'ensemble. La localisation du filtre 103 immédiatement sous la culasse amovible 111 permet en outre de changer ce filtre facilement sans qu'il soit nécessaire de démonter les autres organes disposés dans le poste de détente.

Le régulateur 108, qui est disposé sensiblement axialement dans le corps 110 est suivi d'un redresseur d'écoulement 109 composé d'une plaque perforée 191 contribuant à diviser l'écoulement et d'un élément 192 qui peut être constitué par un matériau poreux. Le redresseur d'écoulement 109 sert à réorganiser à l'entrée du compteur 105 le profil de vitesse du gaz qui se trouve perturbé, du fait de la proximité du clapet 182 du détendeur. Ce redresseur d'écoulement 109 contribue également à la réduction du bruit provoqué par la détente.

Le compteur de débit de gaz 105 est disposé axialement à la suite du régulateur 108 et du redresseur d'écoulement 109, dans le corps 110, et traverse la paroi de séparation 117 pour se projeter à l'intérieur de la seconde chambre 160. Le compteur 105 peut être du type à turbine, comme représenté sur la figure 1, avec des pales 151 dont la détection est assurée par un détecteur de pales 152 monté sur une paroi verticale 153 rattachée à la paroi de séparation 117 et définissant un conduit d'écoulement axial selon le corps 110. Le compteur 105 peut toutefois comprendre un élément de mesure de débit d'un autre type, tel qu'un générateur de vortex ou un autre système utilisé sur les compteurs classiques. On notera que le compteur de débit 105 fonctionne en équipression, comme le régulateur 108, du fait de la présence du corps extérieur 110, et que de ce fait il n'est plus nécessaire de disposer l'élément de mesure du compteur de débit dans un corps propre capable de résister à la pression de service. Dans la mesure où le poids du corps d'un compteur à turbine haute pression classique peut représenter de l'ordre de 20 fois celui de l'élément de mesure qui est le plus souvent construit en matière plastique, la possibilité de monter l'élément de mesure du compteur 105 directement sur la paroi de séparation 117 sans qu'il soit nécessaire de prévoir de façon spécifique pour le compteur un corps résistant à la pression, autre que le corps extérieur 110 de l'ensemble du poste de détente, il est possible de réaliser une économie de poids particulièrement importante.

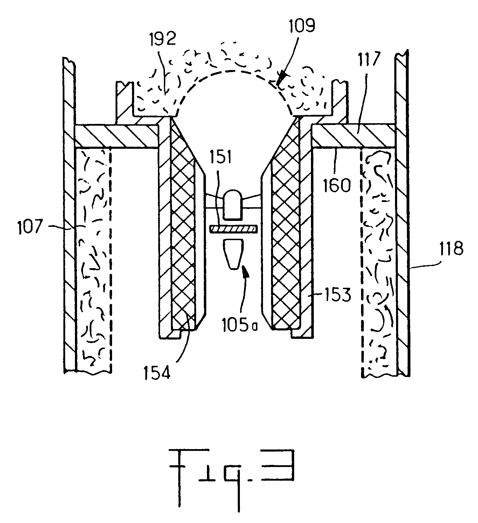

Afin d'adapter le calibre de l'élément de mesure 105 aux conditions d'utilisation, il est possible de mettre en place une chemise cylindrique amovible 154 présentant une section externe de dimensions standardisées adaptées pour s'engager dans le cylindre 153 (fig 3). Un élément de mesure proprement dit 105a de plus petit calibre peut ainsi être placé dans la chemise amovible 154 et permet une adaptation aux conditions de débit optimal sans qu'il soit nécessaire de modifier les autres éléments du poste de détente.

En fonctionnement, le poste de détente 100 reçoit par l'orifice d'entrée 102 le fluide gazeux à la pression amont, qui pénètre dans la chambre supérieure 120. Le gaz qui transite par l'orifice d'entrée rencontre la cartouche filtrante 103 puis le clapet de sécurité 141 disposé à l'intérieur de la cartouche 103 et pénètre ensuite dans le régulateur 108 disposé dans la chambre supérieure 120. Après détente et traversée du redresseur d'écoulement 109, le gaz traverse le compteur 105 et arrive dans la chambre inférieure 160 qui est elle-même aménagée de façon à réaliser un silencieux de type passif 107, qui est constitué par un matériau absorbant phonique réparti sur les parois de la chambre inférieure 160 et qui est destiné à réduire le bruit engendré par la détente. Le gaz ressort ensuite par l'orifice de sortie 106, ou 106', pour rejoindre le réseau de distribution.

On constate ainsi, qu'à l'intérieur du corps 110 sont intégrées toutes les fonctions d'un poste de détente à savoir la filtration, la sécurité, la détente, le comptage et le traitement acoustique, tandis que ces diverses fonctions étaient précédemment éclatées dans divers sous-ensembles disposés en série.

Les avantages qui découlent de la mise en oeuvre d'un poste de détente intégré tel que celui représenté sur la figure 1 sont les suivants :

- seule l'enveloppe extérieure 110 du module 100 supporte la pression de service et doit être soumise à un agrément, tandis que les constituants internes qui fonctionnent en quasi équipression peuvent être réalisés de façon simplifiée et sans avoir besoin d'un corps propre résistant à la pression de service.

- la conception modulaire de l'ensemble 100 facilite la maintenance puisque l'ouverture de la culasse supérieure 111 donne directement accès au clapet 141 de la vanne de sécurité, à la cartouche 103 du filtre pour permettre son remplacement, et à l'ensemble du régulateur 108, du redresseur d'écoulement 109 et du compteur 105 qui peuvent être extraits pour l'entretien ou le remplacement d'une membrane par exemple ou encore pour un étalonnage périodique, et ceci sans aucun débridage.

On notera que dans le mode de réalisation de la figure 1, la présence d'un redresseur d'écoulement 109 adapté permet de supprimer toute canalisation de liaison entre le régulateur 108 et le compteur 105, et donc d'accroître de façon radicale la compacité de l'ensemble, tout en garantissant une homogénéité du champ de vitesses de l'écoulement gazeux à l'entrée du compteur de débit dont le principe est basé sur une mesure de vitesse de l'écoulement.

Diverses études sur les écoulements perturbés ont montré que pour obtenir un régime d'écoulement idéal dans lequel la répartition des vitesses est invariable d'une section droite à l'autre de l'écoulement, il convient de mettre en oeuvre des conduites rectilignes d'une longueur importante. On a déjà proposé, notamment dans une communication de MM.Gajan, Hebrard, Bosch et Lejan effectuée au Congrès ATG du gaz en 1988 et intitulée "Un redresseur d'écoulement pour la débitmétrie par diaphragme qui permet de s'affranchir des conditions d'installation", de réaliser un redresseur d'écoulement permettant de réduire la longueur de conduite rectiligne nécessaire pour l'obtention d'un champ de vitesses homogène. Un tel redresseur, qui est conçu spécifiquement pour les techniques de comptage par diaphragme et présente une très faible perte de charge, s'avère toutefois présenter une efficacité réduite s'il est simplement placé en juxtaposition à la sortie d'un régulateur-détendeur.

Conformément à la présente invention, le redresseur d'écoulement 109 est réalisé de façon spécifique et est implanté à l'intérieur même d'une partie 190 du corps 180, 190 du régulateur-détendeur 108, ce qui lui permet de coopérer intimement avec ce dernier.

Ainsi, comme on peut le voir sur la figure 1, la plaque perforée 191 munie de perforations 193 sert également de support au siège de clapet 181 du régulateur 108.

L'écoulement du gaz essentiellement radial entre le clapet de sortie 182 du régulateur 108 et le siège de clapet 181 de forme conique, est réorganisé selon une direction axiale dans un faible encombrement et passe d'une vitesse sonique au niveau du clapet 182 à une vitesse de quelques mètres par seconde en sortie de la plaque 191. Les effets de jets, qui sont dommageables pour les compteurs à turbine, sont supprimés car, en sortie du clapet 182, le jet gazeux dirigé sur la paroi interne du corps 190 du régulateur 108 perd une part importante de son énergie cinétique qui se transforme en pression.

La disposition particulière du redresseur 109 permet de s'affranchir du problème lié à la perte de charge du redresseur. En effet, le redresseur est dimensionné pour participer à la détente du gaz c'est-à-dire que sa section de passage utile correspond à celle du clapet 182 du régulateur lorsqu'il est en pleine ouverture.

A titre d'exemple, si le clapet 182 du régulateur qui précède le redresseur 109 présente à pleine ouverture une section de passage correspondant à un orifice de 50 mm, le redresseur 109 devra présenter une section de passage équivalente à celle de cet orifice de 50 mm.

Cette condition permet d'engendrer un étagement de la détente entre le clapet 182 du régulateur et le redresseur 109 par le fait que tout accroissement du débit appelé dans le réseau se traduira par une élévation de pression à l'amont du redresseur 109, laquelle tendra à rejoindre la valeur à l'entrée du régulateur 108 lorsque le clapet 182 de ce dernier sera à pleine ouverture. Dans cette dernière condition toute la détente va se réaliser dans le redresseur 109 qui participe ainsi effectivement à la détente.

Comme cela a déjà été indiqué, le redresseur 109 comprend une plaque 191 sur laquelle est aménagé, au centre, le siège de clapet 181 du régulateur 108.

Cette plaque 191 est percée de nombreux orifices cylindriques 193 disposés en couronne autour du siège 181 du régulateur. Leur nombre $\underline{n}$ est fonction de la section de passage du clapet 182 et correspond au rapport S/s dans lequel :

S est la section de passage du clapet 182 du régulateur à pleine ouverture,

s est la section de passage d'un orifice 193 de la plaque 191.

Le diamètre de chaque orifice 193 peut être compris entre environ 2 et 6 mm, étant entendu que l'efficacité est maximale avec les orifices les plus petits.

Faisant suite à cette plaque perforée 191 est disposé un matériau poreux 192 qui peut être par exemple du métal fritté (tel que du bronze fritté), qui présente l'avantage d'une bonne tenue mécanique.

Le métal fritté peut toutefois être remplacé par d'autres matières pourvu que celles-ci présentent une porosité équivalente. On peut également effectuer un remplissage de l'espace compris entre la plaque 191 et la grille hémisphérique 194 de support de la matière poreuse, placée en sortie du redresseur, avec diverses matières fibreuses, pourvu qu'elles présentent une cohésion leur conférant à la foi la tenue mécanique et la porosité requises. A titre d'exemple l'élément 192 peut être réalisé à partir d'un tissu de fibres de verre.

La perte de charge du matériau poreux 192 mis en oeuvre est du même ordre de grandeur que celle de la plaque à orifice 191 qui le précède.

La grille de sortie 194 de forme hémisphérique permet d'échelonner les pertes de charge du redresseur 109, celles-ci étant maximales vers l'extérieur et minimales au centre. Cette forme favorise la circulation du gaz dans la zone se trouvant à l'aval immédiat du clapet 182.

Enfin outre le rôle de stabilisation et d'homogénéisation des vitesses, la mise en oeuvre du matériau poreux 192 dans ce redresseur 109 contribue à l'atténuation du bruit émis par le régulateur.

La présente invention permet également d'accroitre facilement la dynamique du compteur par rapport aux dispositifs existants.

Actuellement, la dynamique intrinsèque des débitmètres ou compteurs industriels classiques se situe à une valeur de 20. Ce chiffre correspond au rapport du débit maximal sur le débit minimal appréhendable avec une précision normalisée ± 1 %.

Par exemple un compteur pouvant mesurer un débit maximal de 1000 m3/h avec une précision de ± 1 % devra mesurer un débit de 50 m³/h avec la même précision. Sa dynamique sera :

$$\frac{1000}{50} = 20$$

Pour utiliser cette dynamique il est impératif que le compteur fonctionne avec une pression constante ce qui conduit à l'associer à un régulateur de pression comme c'est le cas dans les schémas des figures 1 et 2.

Cette disposition présente des risques importants de destruction du compteur, en raison du surdimensionnement des régulateurs de pression. En effet, ceux-ci doivent fournir le débit maximal du compteur lorsque la pression du réseau d'alimentation est minimale. Or la pression des réseaux est le plus souvent maintenue à la pression maximale. Dans ce cas, les possibilités de débit des régulateurs sont très supérieures à celles des compteurs associés.

Par exemple : un client désirant un débit de 100 m³/h disposera d'un poste de détente et de comptage tel que celui de la figure 1 dont le régulateur sera choisi pour passer ce débit, avec 1,6 bar absolu de pression amont (valeur minimale possible des réseaux moyenne pression de Gaz de France), mais la plupart du temps ce régulateur sera alimenté à 4,8 bar absolu (pression maximale de service des réseaux moyenne pression de Gaz de France) ce qui multiplie par trois ses possibilités en débit. Dans ces conditions, le compteur prévu pour 100 m³/h maxi pourra subir accidentellement de la part de ce régulateur un débit de 300 m³/h, ce qui naturellement va entraîner sa destruction.

La solution également envisageable, qui consisterait à placer le compteur à l'amont du régulateur, dégrade la dynamique globale du poste de détente/comptage, de ce même coefficient de variabilité de la pression amont (4,8/1,6), dans la mesure où le compteur est prévu pour supporter le débit maximal possible du régulateur.

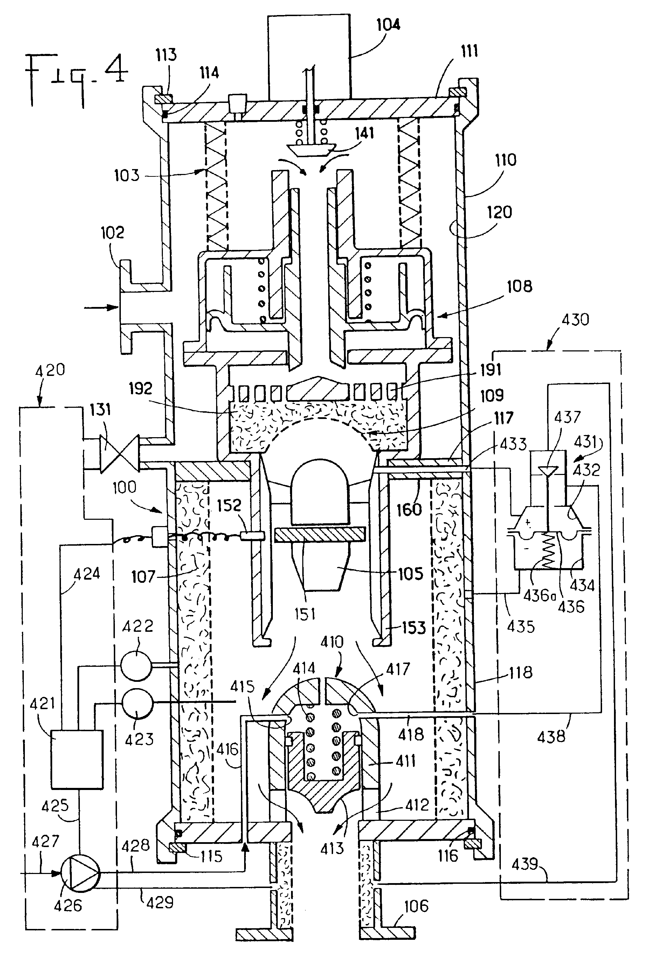

Selon la présente invention, il est possible, comme représenté sur la figure 4, de conserver la disposition aval du compteur 105, associé au régulateur 108 et au redresseur 109 déjà décrit, tout en assurant une augmentation de la dynamique du compteur.

Un dispositif 410 comparable à une vanne de laminage est placé immédiatement à l'aval du compteur 105. Le rôle de ce dispositif 410 est d'introduire une perte de charge en relation avec la vitesse du gaz qui circule dans le compteur 105.

Pour un débit donné l'augmentation de la perte de charge créée par le dispositif piloté 410 introduisant de façon sélective une perte de charge dans la seconde chambre 160 provoquera une élévation de pression au niveau du compteur 105 et par là une diminution proportionnelle de la vitesse.

Dans ces conditions tout se passe comme si le compteur 105 passait automatiquement d'une situation de fonctionnement à pression constante (position aval par rapport au régulateur) à une situation de fonctionnement à pression variable (position amont par rapport au régulateur).

Le dispositif piloté 410 prévu pour engendrer une perte de charge entre le compteur 105 et l'orifice de sortie 106 comprend un corps 411 à l'intérieur duquel peut coulisser un organe mobile 413 formant clapet sur lequel agit un ressort 414 et capable de modifier la section de passage d'orifices 412 formés dans le corps 411 pour permettre un écoulement du gaz vers l'orifice de sortie 106.

Les déplacements du clapet 413 sont provoqués par une pression de commande appliquée depuis un pilote pneumatique 420 resp. 430 par une ligne 428, 416 resp. 438, 418 débouchant par des orifices 415 resp. 417 dans la chambre formée dans le corps 411 derrière le clapet 413.

Le pilotage pneumatique du dispositif 410 de création sélective d'une perte de charge peut être obtenu à partir d'un dispositif 420 à commande électronique ou, à titre de variante à partir d'un dispositif différentiel 430 entièrement pneumatique. Les deux variantes de réalisation ont été représentées sur la figure 4, mais naturellement en pratique il convient de choisir la mise en oeuvre d'un seul des dispositifs de pilotage 420, 430.

Le dispositif de pilotage 420 à commande électronique comprend un dispositif électronique correcteur 421 auquel sont appliqués des signaux d'information délivrés respectivement par le générateur d'impulsions 152 du compteur de débit 105, par un capteur 422 de la pression dans la seconde chambre 160 et par un capteur 423 de la température T dans la seconde chambre 160. Le dispositif électronique correcteur 421 comprend des moyens pour déterminer le débit réel corrigé en fonction du débit mesuré, de la pression P, de la température T et du coefficient de compressibilité du gaz Z, des moyens pour comparer le débit réel corrigé à une valeur de seuil mémorisée correspondant à un débit maximal autorisé pour le compteur de débit 105, et des moyens pour n'autoriser, par une ligne 425 une mise en service d'un pilote pneumatique 426 de commande du dispositif piloté 410 d'introduction sélective d'une perte de charge que lorsque le débit réel corrigé dépasse ladite valeur de seuil mémorisée. Le pilote pneumatique 426 est alimenté à partir d'une ligne d'alimentation 427 et lorsqu'il reçoit des signaux de commande par la ligne 425 délivre une pression de commande par les lignes 428, 416 vers le dispositif 410. Une ligne 429 permet une décharge vers l'orifice de sortie 106 en aval du dispositif 410.

Ainsi, dans cette solution, le correcteur de débit 421, à partir de l'information fréquence délivrée par le générateur d'impulsions 152 du compteur 105, compare cette mesure à une valeur mémorisée qui correspond au débit maximal autorisé pour ce type de compteur. Tant que la fréquence mesurée est inférieure à la consigne mémorisée, le correcteur 421 est sans action sur le pilote 426 de commande de l'organe 410 qui génère la perte de charge.

Lorsque le seuil est atteint, le correcteur 421 délivre un signal sur la ligne 425 qui, par l'intermédiaire du pilote 426 entraîne la mise en service de l'organe 410 générateur de perte de charge.

Cette action entraîne une élévation de la pression au niveau du compteur 105 avec pour conséquence une réduction de la vitesse d'écoulement et par là une diminution du signal fréquence lié à cette vitesse.

Si l'on utilise le dispositif différentiel 430 de pilotage pneumatique, l'organe 410 générateur de perte de charge est commandé à partir d'un dispositif différentiel 431 qui mesure en permanence la perte de charge naturelle du compteur 105. Dans ces conditions, tant que la perte de charge du compteur est inférieure à celle qui correspond au débit maximal autorisé, le dispositif 431 est sans action sur l'organe 410 générateur de perte de charge.

Dans le cas contraire le dispositif différentiel pneumatique 431 réagit et entraîne une action sur l'organe 410 de réglage de perte de charge, identique à celle décrite dans la solution électronique.

Le dispositif différentiel pneumatique 431 peut être réalisé de façon classique. Une membrane 436 chargée à l'aide d'un organe élastique 436a sépare le dispositif en une première chambre 432 reliée par une ligne 433 à une zone d'écoulement gazeux située entre le redresseur d'écoulement 109 et le compteur 105, et une seconde chambre 434 reliée par une ligne 435 à une zone d'écoulement gazeux située en aval du compteur 105. Lorsque la pression différentielle mesurée reste inférieure à une valeur de seuil prédéterminée, un clapet 437 solidaire de la membrane reste ouvert et permet un échappement de la pression de la chambre supérieure par une ligne 439 vers l'orifice de sortie 106. En revanche, lorsque la pression différentielle dépasse la valeur de seuil prédéterminée qui est égale à la perte de charge du compteur correspondant au débit maximal autorisé, le clapet 437 est fermé et autorise l'application d'une pression de commande par les lignes 438, 418 afin d'assurer la mise en service du dispositif 410.

Les solutions présentées en référence à la figure 4 permettent en faisant varier la pression au niveau du compteur 105 de bénéficier de l'ensemble des avantages suivants :

- Il est possible d'utiliser un compteur 105 de calibre inférieur, ce qui autorise la mesure de débits minimum plus petits, et va dans le sens de l'augmentation de la dynamique,
- une économie sur le compteur 105 est réalisée en raison du changement de calibre. En effet, selon l'amplitude de la variation de pression du réseau d'alimentation du poste de détente/comptage il est possible de réduire les calibres d'un facteur compris entre 2 et 4 ce qui naturellement accroît la dynamique de ce même facteur soit : 40 à 80,
- les possibilités des correcteurs de débit 421 du type PTZ, qui fonctionnent le plus souvent à des pressions peu variables, sont mieux utilisées,
- l'économie réalisée sur la diminution du calibre des compteurs 105 permet de compenser le coût du correcteur 420. Ceci est particulièrement vrai dans le cas de comptage entre un réseau de transport et un réseau de distribution,
- le risque de destruction des compteurs disparait car le dispositif empêche les survitesses.

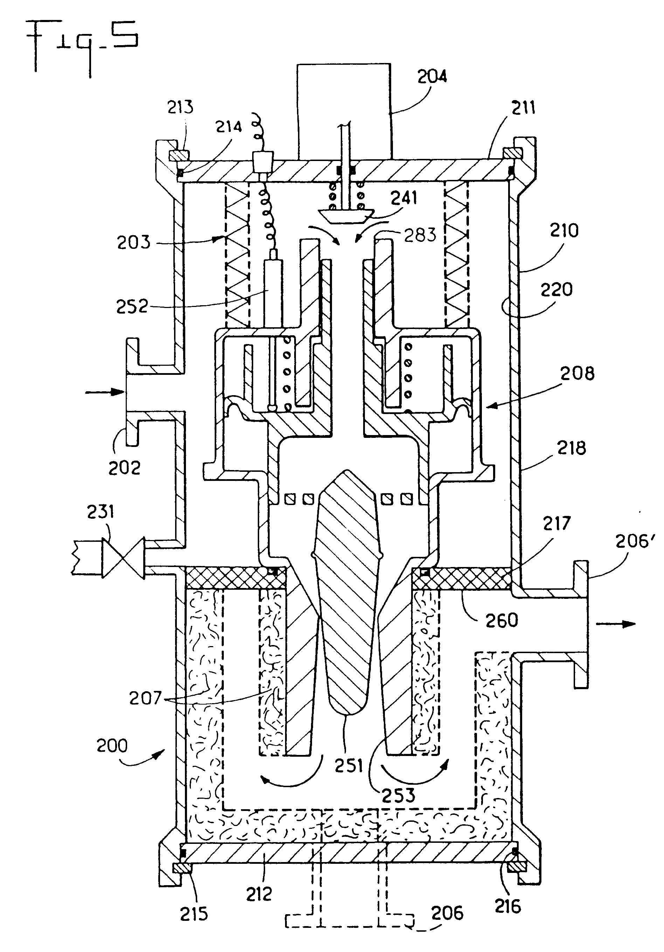

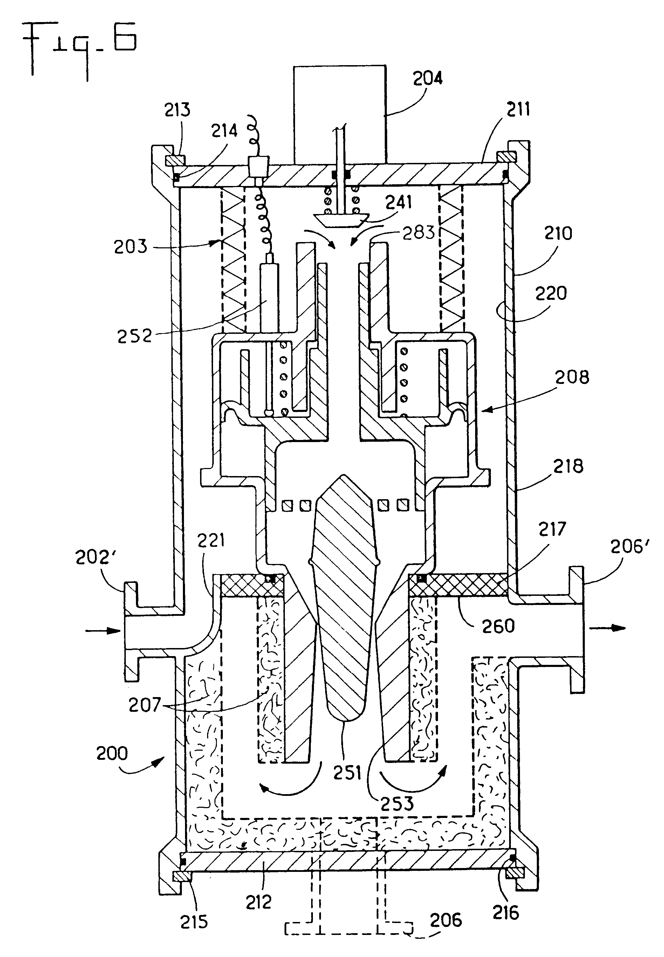

On se reportera maintenant aux figures 5 et 6 qui montrent un second mode de réalisation de la présente invention qui se distingue du mode de réalisation de la figure 1 par le fait que le régulateur piloté 108, le redresseur d'écoulement 109 et le compteur de débit 105 sont remplacés par un régulateur-compteur intégré 208 qui permet de réaliser directement de façon simple et précise des opérations de régulation, détente et comptage. Le régulateur-compteur 208 piloté peut être par exemple du type décrit dans le document de brevet FR-A-2 341 131. Toutefois, la réalisation du régulateur-compteur 208 est simplifiée du fait que celui-ci fonctionne en quasi équipression et peut donc couvrir toutes les gammes de pression avec un seul modèle, dans la mesure où c'est le corps extérieur 210 qui supporte la pression de service. Dans le poste de détente intégré 200 des figures 5 et 6, les éléments référencés 202, 203, 204, 206, 206', 207, 210 à 218, 231, 241, 220, 260, 283 sont identiques aux éléments correspondants de la figure 1 dont les numéros de référence portent les deux mêmes derniers chiffres. On ne décrira pas de nouveau ces divers éléments.

Le régulateur compteur 208, présente, de façon connue en soi, une tuyère à col de section variable définie par un clapet 251 en forme d'ogive et un siège de clapet 253 présentant des parties convergentes et divergentes. La position du clapet 251 et donc de la section de passage de la tuyère à col sonique est déterminée par un capteur de position 252.

Le mode de réalisation de la figure 6 est semblable à celui de la figure 5, si ce n'est que les orifices d'entrée 202' et de sortie 206' représentés en traits forts sont disposés en lignes. Dans ce cas, l'orifice d'entrée 202' est formé dans la paroi latérale 218 du corps 210 à un niveau situé en dessous de la paroi de séparation 217 et communique avec la chambre supérieure 220 par un orifice 221 pratiqué dans la paroi de séparation 217. L'orifice de sortie 206' formé dans la paroi latérale 218 du corps 210 peut lui-même être réalisé comme les orifices de sortie 106' ou 206' des figures 1 et 5.

On constate ainsi, qu'il est très facile de prévoir plusieurs modes de raccordement possibles, (en lignes, d'équerre, décalés) pour le corps 210 ou 110 du poste de détente devant être monté entre la vanne d'entrée et la vanne de sortie 6.

Quel que soit le mode de raccordement par brides du corps 110 ou 210 du poste de détente 100 ou 200 aux vannes d'entrée 2 et de sortie 6, il est possible de réaliser toutes les interventions nécessaires sur le poste de détente sans retirer le corps 110 ou 210, mais simplement en procédant à l'ouverture de l'une ou l'autre des culasses 111, 112. Ceci facilite grandement le démontage et le remontage de ces ensembles.

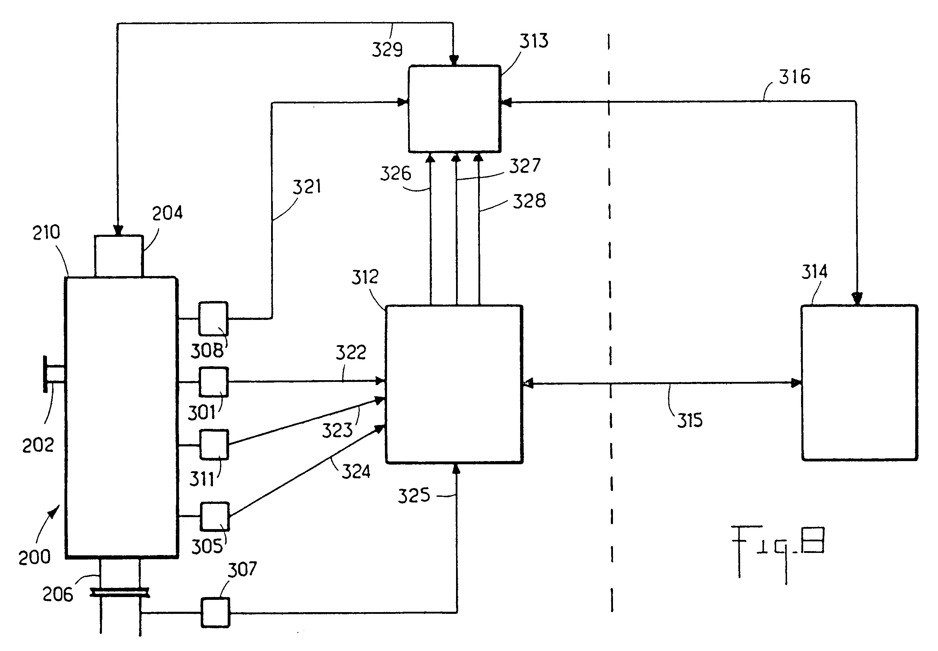

Un poste de détente intégré multifonctions tel que celui représenté sur les figures 5 et 6, qui met en oeuvre un régulateur compteur 208 piloté présente non seulement des avantages sur le plan de sa conception mécanique, mais offre également des possibilités de gestion des informations et de contrôle de la sécurité qui sont particulièrement intéressants. Ainsi, dans le cas d'un réseau secondaire de l'utilisation de gaz raccordé à un réseau principal de distribution de gaz, et équipé d'un ensemble de postes de détente intégré multifonctions tels que ceux décrits en référence aux figures 5 et 6, c'est-à-dire utilisant chacun un régulateur compteur intégré 208 équipé de divers capteurs, il est possible, pour un réseau secondaire de type maillé, de générer des alarmes ou des ordres de mise en sécurité sélectives de la vanne de sécurité de chacun des postes de détente à partir de l'ensemble des paramètres disponibles au niveau de chaque poste de détente. Pour cela,(voir fig 8), un calculateur associé à chaque poste de détente 200, comprend des premiers moyens de calcul de débit 312 que reçoivent par des lignes 322, 323, 324, 325 des informations provenant d'un capteur 301 de pression amont, d'un capteur 311 de température amont du gaz, d'un capteur 305 de position du clapet 251 de la tuyère du régulateur-compteur 208, et d'un capteur 307 de la pression aval dans le réseau secondaire de distribution. De seconds moyens 313 sont prévus dans le calculateur pour recevoir des premiers moyens 312 des informations concernant la pression aval (ligne 326), la position du clapet 251 (ligne 327) et la valeur du débit de gaz calculée par les premiers moyens 312 (ligne 328).

Une information sur la présence d'une pression pilote fournie par un capteur 308 est également appliquée au circuit 313 par une ligne 321. Les circuits 313 peuvent alors commander par une ligne 329 une action éventuelle sur la vanne de sécurité 204 associée au poste de détente 200. La surveillance des divers postes de détente d'un même réseau secondaire équipés chacun d'un calculateur comprenant des circuits tels que les circuits 312, 313, peut être effectuée à partir d'un poste centralisé de gestion du réseau 314 relié aux calculateurs 312, 313, par des lignes 315, 316.

La surveillance des postes de détente d'un réseau peut par exemple s'appliquer à la détection de débit de fuites au niveau de chacun des postes de détente, ce débit de fuite pouvant être dû à une mauvaise fermeture du clapet du fait de la présence de corps étrangers par exemple. Dans ce cas, on procède à la vérification conjointe de la position du clapet (ligne 327) et par là du débit qui transite dans l'appareil (ligne 328) de la présence ou non du signal pilote, c'est-à-dire de la pression de commande du régulateur (ligne 321) et du niveau de pression dans le réseau aval (ligne 326). Cette vérification permet de déterminer une procédure d'autocontrôle de l'appareil qui peut conduire soit au déclenchement de la vanne de sécurité 204, si le débit de fuite entraîne un dépassement de la pression de consigne du réseau secondaire, soit l'autorisation de ce débit de fuite si celui-ci ne met pas le réseau en danger. Naturellement, dans ce cas le signalement de ce défaut apparaîtra sous forme d'alarme afin de signaler qu'il conviendra d'effectuer une réparation.

On constate ainsi à partir des informations gérées par le calculateur 312, 313 associé à un poste de détente intégré, qu'il est possible de façon simple d'apprécier les risques pour le réseau secondaire et donc de définir les urgences pour porter les remèdes nécessaires, et d'éviter des déclenchements systématiques des vannes de sécurité, pouvant conduire à une interruption totale de la distribution de gaz dans le réseau secondaire comme cela pourrait être le cas avec des dispositifs traditionnels.

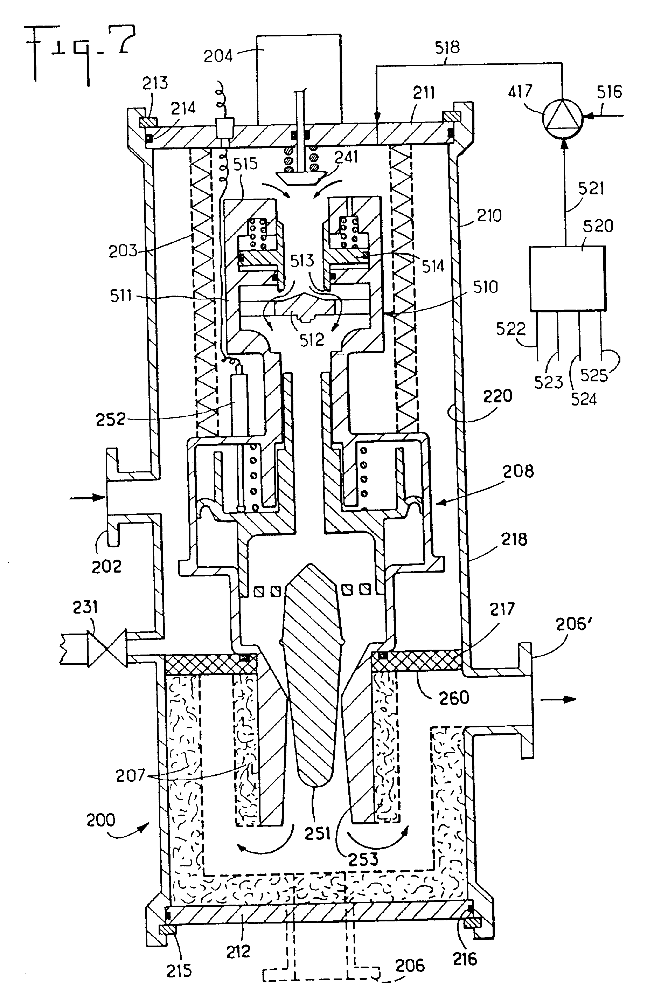

La figure 7 représente une variante du mode de réalisation des figures 5 et 6, dans laquelle est intégré un dispositif dit "casseur de pression" qui permet comme dans le mode de réalisation de la figure 4, d'accroître la dynamique du régulateur/compteur.

Le régulateur-compteur 208, du point de vue comptage, est assimilé à un compteur classique placé à l'amont du régulateur de pression. Il subit de ce fait la variabilité de la pression des réseaux d'alimentation, ce qui conduit aux mêmes conséquences sur sa dynamique, que pour un compteur classique, à savoir difficulté de mesurer avec précision un petit débit lorsque la pression du réseau est maximum.

Dans le mode de réalisation de la figure 7, la dynamique du régulateur/compteur 208 est accrue par la mise en service d'un organe 510 piloté à partir d'un calculateur de débit 520.

Le dispositif piloté 510 de réduction sélective de pression est disposé dans la première chambre 220 à l'intérieur du filtre 203 de forme cylindrique entre le clapet de sécurité 241 et le régulateur-compteur intégré 208. Le calculateur de débit 520 auquel sont appliqués des signaux représentatifs des paramètres de fonctionnement du régulateur-compteur intégré 208, et qui surveille en permanence la section d'ouverture du col du régulateur-compteur intégré 208 pour n'autoriser la mise en service d'un pilote pneumatique 417 de commande du dispositif piloté 510 de réduction sélective de pression que lorsque la section d'ouverture dudit col est descendue en dessous d'une valeur de seuil prédéterminée.

Les informations appliquées au calculateur de débit 520 par les lignes 522 à 525 sont relatives à la pression et à la température du gaz en amont du régulateur-détendeur, à la position relative des pièces 251, 253 définissent le col de section variable, obtenue à partir du détecteur 252, et à la masse volumique du gaz.

Le pilote pneumatique est alimenté en fluide par une ligne d'alimentation 516 et, lorsqu'il reçoit du calculateur 520 un signal de commande par une ligne 521, délivre une pression de commande par une ligne 518 vers une chambre ménagée dans le corps 511 du dispositif 510 derrière un piston 514 chargé par des ressorts 515 et portant à son extrémité aval un clapet 513 coopérant avec un siège de clapet 512.

Lorsque le régulateur-compteur 208 fonctionne dans une plage d'ouverture du clapet 251 qui permet une mesure précise du débit (par exemple entre 5 et 100 %); le calculateur 520 commande au dispositif 510 de rester ouvert. Dans ce cas, la pression à l'entrée de la tuyère 253 est voisine de la pression du réseau.

Par contre, lorsque le régulateur-compteur 208 se trouve dans une plage d'ouverture qui ne permet pas d'effectuer une mesure précise du débit (par exemple : entre 0 et 5 d'ouverture), le calculateur 520 par l'intermédiaire du pilote pneumatique 517 commande la fermeture du dispositif 510 jusqu'à l'obtention d'une chute de pression à l'entrée du régulateur-compteur 208 laquelle va engendrer un accroissement d'ouverture du clapet 251. Lorsque cette ouverture atteindra une valeur inscrite dans la limite 5 à 100 %, donc compatible avec la précision recherchée, le système fixera ce nouvel équilibre.

Comme dans le cas du dispositif 410 de la figure 4, le dispositif 510 va permettre d'accroître la dynamique de l'ensemble de détente-comptage dans des proportions importantes.

## Revendications

1. Poste de détente intégré multifonctions pour l'alimentation en gaz d'un réseau secondaire d'utilisation à partir d'un réseau principal de distribution, comprenant un corps externe unique (110; 210) conçu pour résister à la pression de service du gaz, dans lequel sont disposés les éléments actifs d'au moins un filtre (103; 203), un régulateur de pression (108; 208) et une vanne de sécurité (104; 204), le corps externe unique (110; 210) comprenant une paroi latérale (118; 218) de forme essentiellement cylindrique, des première et seconde culasses (111, 112; 211, 212) étant montées aux extrémités frontales du corps externe unique (110; 210), une paroi transversale de séparation et de support (117; 217) sensiblement parallèle aux première et seconde culasses (111, 112; 211, 212) étant montée à l'intérieur du corps unique (110; 210) pour définir des première et seconde chambres (120, 160; 220, 260) et le corps externe unique (110; 210) étant muni d'une bride d'entrée rattachée à une vanne d'entrée (2) et définissant un orifice d'entrée (102; 202) qui débouche dans ladite première chambre (120; 220) et d'une bride de sortie rattachée à une vanne de sortie (6) et définissant un orifice de sortie (106; 106′; 206; 206′) qui prend naissance dans ladite seconde chambre (160; 260), caractérisé en ce que ladite première culasse (111; 211) et ladite première chambre (120; 220) constituent respectivement une culasse supérieure et une chambre supérieure par rapport à la paroi transversale de séparation et de support (117, 217) tandis que ladite seconde culasse (112; 212) et ladite seconde chambre (160, 260) constituent respectivement une culasse inférieure et une chambre inférieure par rapport à la paroi transversale de séparation et de support (117, 217), en ce qu'il comprend en outre un compteur de débit (105; 208) monté sur ladite paroi transversale (117; 217), en ce que le filtre (103; 203) est constitué par une cartouche cylindrique disposée entre la culasse supérieure (111; 211) et le régulateur de pression (108; 208), lui-même monté sur ladite paroi transversale (117; 217) et en ce que la vanne de sécurité (104; 204) est montée sur la culasse supérieure (111; 211) et comporte un clapet de sécurité (141; 241) disposé en amont du régulateur de pression (108; 208) à la partie supérieure de celui-ci et à l'intérieur du filtre (103; 203) de forme cylindrique.

2. Poste de détente selon la revendication 1, caractérisé en ce qu'il comprend un régulateur piloté (108) disposé sensiblement axialement à l'intérieur du corps externe (110) dans ladite chambre supérieure (120), avec un clapet de sortie (182) et un siège de clapet de sortie (181) définissant un écoulement de gaz essentiellement radial, un redresseur d'écoulement (109) disposé immédiatement en aval du clapet de sortie (182) du régulateur piloté (108) pour réorganiser l'écoulement de gaz selon une direction axiale et un compteur de débit (105) séparé disposé immédiatement en aval du redresseur d'écoulement (109).

3. Poste de détente selon la revendication 2, caractérisé en ce que le redresseur d'écoulement (109) comprend une plaque perforée (191) qui constitue également un support pour le siège (181) du clapet de sortie du régulateur piloté (108), et un élément (192) constitué par un matériau poreux et disposé immédiatement en aval de la plaque perforée (191).

4. Poste de détente selon la revendication 3, caractérisé en ce que la plaque perforée (191) comprend un ensemble d'orifices (193) présentant chacun une section de passage de l'ordre de 3 à 30 mm2 et en ce que la section totale de passage utile des orifices (193) de la plaque perforée (191) est équivalente à la section de passage du clapet de sortie (182) du régulateur (108) en position de pleine ouverture, de telle sorte qu'il se produit un étagement de la détente du gaz entre le clapet de sortie (182) du régulateur (108) et le redresseur d'écoulement (109).

5. Poste de détente selon la revendication 4, caractérisé en ce qu'au sein du redresseur d'écoulement (109) l'élément (192) en matériau poreux présente une perte de charge du même ordre de grandeur que celle de la plaque perforée (191).

6. Poste de détente selon l'une quelconque des revendications 3 à 5, caractérisé en ce que l'élément (192) en matériau poreux présente une face de sortie concave de forme hémisphérique.

7. Poste de détente selon l'une quelconque des revendications 2 à 6, caractérisé en ce que le compteur de débit (105) est monté à l'intérieur d'une chemise cylindrique amovible (154) présentant une section externe de dimensions standardisées adaptée pour s'engager dans un cylindre (153) de support de compteur de débit monté sur ladite paroi transversale (117).

8. Poste de détente selon l'une quelconque des revendications 2 à 7, caractérisé en ce qu'il comprend en outre un dispositif piloté (410) d'introduction sélective d'une perte de charge disposé dans la chambre inférieure (160) entre le compteur de débit (105) et l'orifice de sortie (106) pour introduire une perte de charge réagissant sur la vitesse du gaz circulant dans le compteur de débit (105) afin d'accroître la dynamique du compteur (105).

**9.** Poste de détente selon la revendication 8, caractérisé en ce qu'il comprend un dispositif électronique correcteur (421) auquel sont appliqués des signaux d'information délivrés respectivement par un détecteur de débit (152) associé au compteur de débit (105), par un capteur (422) de la pression dans la chambre inférieure (160) et par un capteur (423) de la température dans la chambre inférieure (160), en ce que le dispositif électronique correcteur (421) comprend des moyens pour déterminer le débit réel corrigé en fonction du débit mesuré, de la pression, de la température et du coefficient de compressibilité du gaz, des moyens pour comparer le débit réel corrigé à une valeur de seuil mémorisée correspondant à un débit maximal autorisé pour le compteur de débit (105), et des moyens pour n'autoriser une mise en service d'un pilote pneumatique (426) de commande du dispositif piloté (410) d'introduction sélective d'une perte de charge que lorsque le débit réel corrigé dépasse ladite valeur de seuil mémorisée.

**10.** Poste de détente selon la revendication 8, caractérisé en ce qu'il comprend un dispositif pneumatique différentiel (430) qui mesure en permanence la perte de charge naturelle du compteur (105) compare celle-ci à une perte de charge de référence correspondant au débit maximal autorisé, et commande l'actionnement du dispositif piloté (410) d'introduction sélective d'une perte de charge lorsque la perte de charge mesurée dépasse la perte de charge de référence.

**11.** Poste de détente selon la revendication 1, caractérisé en ce qu'il comprend un régulateur-compteur intégré (208) à pression pilote équipé d'une tuyère (253) définissant avec un clapet en forme d'ogive (251) un col de section variable dont l'écoulement est parallèle à l'axe du corps unique (210).

**12.** Poste de détente selon la revendication 11, caractérisé en ce qu'il comprend en outre un dispositif piloté (510) de réduction sélective de pression disposé dans la chambre supérieure (220) à l'intérieur du filtre (203) de forme cylindrique entre le clapet de sécurité (241) et le régulateur-compteur intégré (208) afin d'accroître la dynamique de ce dernier.

**13.** Poste de détente selon la revendication 12, caractérisé en ce qu'il comprend un calculateur de débit (520) auquel sont appliqués des signaux représentatifs des paramètres de fonctionnement du régulateur-compteur intégré (208), et qui surveille en permanence la section d'ouverture du col du régulateur-compteur intégré (208) pour n'autoriser la mise en service d'un pilote pneumatique (517) de commande du dispositif piloté (510) de réduction sélective de pression que lorsque la section d'ouverture dudit col est descendue en dessous d'une valeur de seuil prédéterminée.

**14.** Poste de détente selon l'une quelconque des revendications 11 à 13, caractérisé en ce qu'il comprend au moins un capteur (308) de la pression pilote de commande du régulateur-compteur (208), un capteur (301) de la pression amont du gaz, un capteur (307) de la pression aval du gaz, un capteur (311) de la température amont du gaz, un capteur (252, 305) de la position relative des pièces (251, 253) définissant la tuyère à col de section variable et un calculateur (312), et en ce que le calculateur (312) comprend d'une part des moyens pour déterminer le débit de gaz à travers le régulateur-compteur intégré (208) à partir des informations fournies par les capteurs de pression amont (301), de température amont (311) et de position relative (252, 305) des pièces (251, 253) définissant la tuyère à col de section variable, et d'autre part des seconds moyens (313) pour commander l'actionnement de la vanne de sécurité (204) en fonction de la valeur du débit calculée par les premiers moyens, et des informations fournies par les capteurs de la pression aval (307) et de la pression pilote (308).

**15.** Poste de détente selon l'une quelconque des revendications 1 à 14, caractérisé en ce que l'orifice de sortie (106; 206) est formé dans la culasse inférieure (112; 212) pour définir un orifice de sortie en équerre par rapport à l'orifice d'entrée (102; 202).

**16.** Poste de détente selon l'une quelconque des revendications 1 à 14, caractérisé en ce que l'orifice de sortie (106; 206) est formé dans la paroi latérale (118; 218) du corps unique (110; 210) en étant disposé en ligne avec l'orifice d'entrée (102; 202).

**Claims**

**1.** Integrated multifunction regulator station for gas supply to a secondary user mains running off a principal distribution mains, comprising a single external housing (110; 210) designed so as to withstand an operating pressure, in which are placed the active elements of at least a filter (103; 203), a pressure regulator (108,208) and a safety valve (104; 204), the single external housing (110; 210) comprising an essentially cylindrical lateral wall (118; 218), first and second bulkheads (111, 112; 211,212) being mounted on the front ends of the single external housing (110;210), a transversal separating and supporting wall (117;217) lying substantially parallel to the first and second bulkheads (111, 112 ;211, 212) being disposed inside the single external body (110; 210) to define first and second chambers (120, 160; 220, 260) and the single external housing (110; 210) being fitted with an entrance flange joined to an input valve (2) and defining an input orifice (102; 202) which gives onto said first chamber (120; 220) and an output flange joined to an output valve (6) and defining an output orifice (106,106'; 206, 206') formed inside said second chamber (160; 260), characterized in that said first bulkhead (111; 211) and said first chamber (120; 220) constitute respectively an upper bulkhead and an upper chamber with respect to the transversal separating and supporting wall (117; 217) while said second bulkhead (112; 212) and said second chamber (160; 260) constitute respectively a lower bulkhead and a lower chamber with respect to the transversal separating and supporting wall (117; 217), in that it further comprises a flow meter (105; 208) mounted on said transversal wall (117; 217), in that said filter (103; 203) is formed by a cylindrical cartridge between the first bulkhead (111; 211) and the pressure regulator (108; 208), which is itself mounted on said transversal wall (117; 217), and in that the safety valve (104; 204) is mounted on the upper bulkhead (111; 211) and comprises a safety valve head (141; 241) located upstream of the pressure regulator (108; 208), at the upper part of the latter and inside the cylindrically shaped filter (103; 203).

2.  Regulator station according to claim 1, characterized in that it comprises an actuable regulator (108) located substantially axially inside the external housing (110) within said upper chamber (120), with an output valve head (182) and an output valve seat (181) defining an essentially radial gas outflow, a flow director (109) located immediately downstream of the actuable regulator's output valve head (182) to redirect the gas flow along an axial direction, and a separate flow meter (105) located immediately downstream of the flow director (109).

3.  Regulator station according to claim 2, characterized in that the flow director (109) comprises a perforated plate (191) that also serves as a support for the valve seat (181) of the output valve head of the actuatable regulator (108), and an element (192) constituted of porous material and located immediately downstream of the perforated plate (191).

4.  Regulator station according to claim 3, characterized in that the perforated plate (191) comprises a set of holes (193) whose cross-sections are of the order of 3 to 30 mm$^2$ and in that the total passage cross-section of the holes (193) in the perforated plate (191) is equivalent to the flow aperture of the output valve head (182) of the regulator (108) in fully open position so that gas regulation occurs in stages between the output valve head (182) of the regulator (108) and the flow director (109).

5.  Regulator station according to claim 4, characterized in that inside the flow regulator (109) the porous material element (192) offers a load loss of the same order as that of the perforated plate (191).

6.  Regulator station according to any one of claims 3 to 5, characterized in that the porous material element (192) has a hemispherically-shaped concave output face.

7.  Regulator station according to any one of claims 2 to 6, characterized in that the flow meter (105) is mounted inside a movable cylindrical liner (154) having a standardized external cross-section for engagement inside a support cylinder (153) of the flow meter mounted on said transversal wall (117).

8.  Regulator station according to any one of claims 2 to 7, characterized in that it further comprises an actuable device (410) for selectively introducing a load loss, disposed in the lower chamber (160) between the flow meter (105) and the outlet orifice (106) for introducing a load loss, that reacts to the speed of the gas travelling inside the flow meter (105) in order to increase the meter's dynamic.

9.  Regulator station according to claim 8, characterized in that it includes an electronic correction device (421) to which are applied data signals respectively supplied by a flow detector (152) associated to the flow meter (105), by a pressure sensor (422) in the lower chamber (160) and by a temperature sensor (423) in the lower chamber (160), in that the electronic correction device (421) comprises means for determining the true flow corrected as a function of the measured gas flow, of the pressure, of the temperature and of the gas compressibility coefficient, means for comparing the true corrected flow with a stored threshold value corresponding to a maximum allowed flow for the flow meter (105), and means for only authorizing the activation of a pneumatic actuator (426) of the actuatable device (410), for selectively introducing a load loss, only when the true corrected flow rate exceeds the maximum stored threshold value.

10. Regulator station according to claim 8, characterized in that it comprises a differential pneumatic device (430) that continuously measures the natural load loss of the meter (105), compares it with a reference load loss corresponding to the maximum allowed flow, and activates the actuable device (410) for selectively introducing a load loss when the measured load loss exceeds the reference load loss.

11. Regulator station according to claim 1, characterized in that it comprises an integrated regulator-meter (208) at reference pressure fitted with a nozzle (253) defining with an ogival valve head (251) a variable cross-section neck in which the flow is parallel to the axis of the single housing (210).

12. Regulator station according to claim 11, characterized in that it further includes an actuable device (510) for selectively reducing pressure, located in the upper chamber (220), inside the cylindrical shaped filter (203), between the safety valve head (241) and the integrated regulator-meter (208), in order to increase the dynamic of the latter.

13. Regulator station according to claim 12, characterized in that it comprises a flow calculator (520) into which are fed signals corresponding to the operating parameters of the integrated regulator-meter (208) and which continuously monitors the neck opening of the integrated regulator-meter (208) so as to only allow the activation of a pneumatic control device (517), acting on the actuable device (510) for selective pressure reduction, when the neck opening has fallen below a predetermined threshold value.

14. Regulator station according to any one of claims 11 to 13, characterized in that it comprises at least one sensor (308) for the activating pressure of the regulator-meter (208), an upstream gas pressure sensor (301), an upstream gas temperature sensor (307), a sensor (311) determining the relative position of the elements (251, 253) defining the nozzle having a variable cross-section neck, and a calculator (312), and in that the calculator (312) comprises on the one hand means for determining the gas flow through the integrated regulator-meter (208) on the basis of data supplied by the upstream pressure sensor (301), by the upstream temperature sensor (311) and by the sensor (252, 305) determining the relative position of elements (251, 253) defining the nozzle having a variable cross-section neck, and on the other hand second means (313) controlling the activation of the safety valve (204) as a function of the flow value calculated by the first means, and data supplied by the downstream pressure sensor (307) and activating pressure sensor (308).

15. Regulator station according to any one of claims 1 to 4, characterized in that the output orifice (106; 206) is formed in the lower bulkhead (112; 212) to define an output orifice that is at right angles with respect to the input orifice (102; 202).

16. Regulator station according to any one of claims 1, 2 and 11, characterized in that the output orifice is formed in the lateral wall (118; 218) of the single housing (110; 210) while being positioned in line with the input orifice.

**Patentansprüche**

1. Mehrzweck-Entspannungsstation zum Versorgen eines sekundären Gasetzes zur Benutzung von einem Haupt-Verteilungsnetz aus, mit einem äußeren, einzigen Gehäuse (110; 210), das dazu eingerichtet ist, dem Betriebsdruck des Gases zu widerstehen, worin als Funktionselemente mindestens ein Filter (103; 203), ein Druckregler (108; 208) und ein Sicherheitsventil (104; 204) angeordnet sind, wobei das äußere, einzige Gehäuse (110; 210) eine im wesentliche zylinderförmige Seitenwand (118; 218) und einen ersten und zweiten Verschluß (111, 112; 211, 212) aufweist, die an den Stirnenden des äußeren, einzigen Gehäuses (110; 210) angebracht sind, wobei eine zum ersten und zweiten Verschluß (111, 112; 211, 212) im wesentlichen parallele, querverlaufende Trenn- und Tragewand (117; 217) im Inneren des einzigen Gehäuses (110; 210) angebracht ist, um eine erste und zweite Kammer (120; 160; 220, 260) zu bilden, und wobei das äußere, einzige Gehäuse (110; 210) mit einem Einlaßflansch versehen ist, der an ein Einlaßventil (2) angesetzt ist und eine Einlaßöffnung (102; 202) bildet, die in die genannte erste Kammer (120; 220) einmündet, sowie mit einem Auslaßflansch, der an ein Auslaßventil (6) angesetzt ist und eine Auslaßöffnung (106; 106′; 206; 206′) bildet, die der genannten zweiten Kammer (160; 260) entspringt, dadurch gekennzeichnet, daß der genannte erste Verschluß (111; 211) und die genannte erste Kammer (120; 220) jeweils in Bezug auf die querverlaufende Trenn- und Tragewand (117; 217) einen oberen Verschluß und eine obere Kammer bilden, während der genannte zweite Verschluß (112; 212) und die genannte zweite Kammer (160, 260) jeweils einen unteren Verschluß und eine untere Kammer in Bezug auf die querverlaufende Trenn- und Tragewand (117, 217) bilden, daß sie außerdem einen Durchflußzähler (105; 208) aufweist, der auf der genannten querverlaufenden Wand (117; 217) angebracht ist, daß der Filter (103; 203) von einer zylindrischen Patrone gebildet ist, die zwischen dem oberen Verschluß (111; 211) und dem Druckregler (108; 208) angeordnet ist, der seinerseits auf der genannten querverlaufenden Wand (117; 217) angebracht ist, und daß das Sicherheitsventil (104; 204) auf dem oberen Verschluß (111; 211) angebracht ist und einen Sicherheitsventilkörper (141; 241) aufweist, der stromaufwärts vom Druckregler (108; 208) an dessen oberem Teil sowie im Inneren des zylinderförmigen Filters (103; 203) angeordnet ist.

2. Entspannungsstation nach Anspruch 1, dadurch gekennzeichnet, daß sie einen gesteuerten Regler (108) aufweist, der im wesentlichen axial im Inneren des äußeren Gehäuses (110) in der genannten oberen Kammer (120) angeordnet ist, mit einem Auslaßventilkörper (182) und einem Auslaßventilkörper-Sitz (181), der eine im wesentlichen radiale Strömung des Gases festlegt, einen Strömungsgleichrichter (109), der unmittelbar stromaufwärts vom Auslaßventilkörper (182) des gesteuerten Reglers (108) angeordnet ist, um die Strömung des Gases in axialer Richtung umzulenken, sowie einen getrennten Durchflußzähler (105), der unmittelbar stromabwärts vom Strömungsgleichrichter (109) angeordnet ist.

3. Entspannungsstation nach Anspruch 2, dadurch gekennzeichnet, daß der Strömungsgleichrichter (109) eine perforierte Platte (191) aufweist, die auch einen Träger für den Auslaßventilkörper-Sitz (181) des gesteuerten Reglers (108) bildet, sowie ein Element (192), das aus einem porösen Material gebildet ist und unmittelbar stromabwärts von der perforierten Platte (191) angeordnet ist.

4. Entspannungsstation nach Anspruch 3, dadurch gekennzeichnet, daß die perforierte Platte (191) eine Gruppe von Öffnungen (193) aufweist, die jeweils einen Durchtrittsquerschnitt in der Größenordnung von 3 bis 30 mm$^2$ aufweisen, und daß der gesamte, nutzbare Durchtrittsquerschnitt der Öffnungen (193) der perforierten Platte (191) äquivalent ist zum Durchtrittsquerschnitt des Auslaßventilkörpers (182) des Reglers (108) in voll geöffneter Stellung, so daß sich eine Abstufung der Entspannung des Gases zwischen dem Auslaßventilkörper (182) des Reglers (108) und dem Strömungsgleichrichter (109) einstellt.

5. Entspannungsstation nach Anspruch 4, dadurch gekennzeichnet, daß innerhalb des Strömungsgleichrichters (109) das Element (192) aus porösem Material einen Druckverlust in derselben Größenordnung wie der der perforierten Platte (191) aufweist.

6. Entspannungsstation nach irgendeinem der Ansprüche 3 bis 5, dadurch gekennzeichnet, daß das Element (192) aus porösem Material eine konkave, halbkugelförmige Auslaßfläche aufweist.

7. Entspannungsstation nach irgendeinem der Ansprüche 2 bis 6, dadurch gekennzeichnet, daß der Durchflußzähler (105) im Inneren eines zylindrischen, abnehmbaren Mantels (154) angebracht ist, der einen Außenquerschnitt mit genormten Abmessungen aufweist, der dazu eingerichtet ist, in einen Tragezylinder (153) für den Durchflußzähler einzugreifen, der auf der genannten querverlaufenden Wand (117) angebracht ist.

8. Entspannungsstation nach irgendeinem der Ansprüche 2 bis 7, dadurch gekennzeichnet, daß sie außerdem eine gesteuerte Vorrichtung (410) zum wahlweisen Einbringen eines Druckverlustes aufweist, die in der unteren Kammer (160) zwischen dem Durchflußzähler (105) und der Auslaßöffnung (106) angeordnet ist, um einen Druckverlust einzubringen, und die auf die Geschwindigkeit des Gases anspricht, das im Durchflußzähler (105) umläuft, um die Dynamik des Zählers (105) zu erhöhen.

9. Entspannungsstatibn nach Anspruch 8, dadurch gekennzeichnet, daß sie eine elektronische Regeleinrichtung (421) aufweist, an die die Informationssignale angelegt werden, die von einem Durchflußmeßfühler (152), der dem Durchflußzähler (105) zugeordnet ist, von einem Druckfühler (422) in der unteren Kammer (160) und von einem Temperaturfühler (423) in der unteren Kammer (160) abgegeben werden, daß die elektronische Regeleinrichtung (421) Mittel aufweist, um den tatsächlichen Durchfluß zu bestimmen, der als Funktion des gemessenen Durchflusses, des Druckes, der Temperatur und des Kompressibilitätsbeiwertes des Gases korrigiert ist, Mittel, um den tatsächlichen, korrigierten Durchfluß mit einem eingespeicherten Schwellenwert zu vergleichen, der einem maximalen, zulässigen Durchfluß für den Durchflußzähler (105) entspricht, sowie Mittel, um eine Inbetriebnahme eines pneumatischen Reglers (426) zum Ansteuern der gesteuerten Vorrichtung (410) zum wahlweisen Einbringen eines Druckverlustes nur dann zuzulassen, wenn der tatsächliche, korrigierte Durchfluß den genannten, eingespeicherten Schwellenwert überschreitet.

10. Entspannungsstation nach Anspruch 8, dadurch gekennzeichnet, daß sie eine pneumatische Differntialvorrichtung (430) aufweist, die ständig den natürlichen Druckverlust des Zählers (105) mißt, diesen mit einem BezugsDruckverlust vergleicht, der dem maximalen, zulässigen Durchfluß entspricht, und die Betätigung der gesteuerten Vorrichtung (410) zum wahlweisen Einbringen eines Druckverlustes dann steuert, wenn der gemesssene Druckverlust den Bezugs-Druckverlust überschreitet.

11. Entspannungsstation nach Anspruch 1, dadurch gekennzeichnet, daß sie einen integrierten Steuerdruck-ReglerZähler (208) aufweist, der mit einer Düse (253) ausgestattet ist, die zusammen mit einem ogivalen Ventilkörper (251) einen Hals mit variablem Querschnitt bildet, dessen Durchfluß parallel zur Achse des einzigen Gehäuses (210) verläuft.

12. Entspannungsstation nach Anspruch 11, dadurch gekennzeichnet, daß sie außerdem eine gesteuerte Vorrichtung (510) zum wahlweisen Verringern des Drucks aufweist, die in der oberen Kammer (220) im Inneren des zylinderförmigen Filters (203) zwischen dem Sicherheits-Ventilkörper (241) und dem integrierten Regler-Zähler (208) angeordnet ist, um die Dynamik dieses letztgenannten zu steigern.

13. Entspannungsstation nach Anspruch 12, dadurch gekennzeichnet, daß sie einen Durchflußrechner (520) aufweist, an den die Signale angelegt werden, die repräsentativ sind für die Funktionsparameter des integrierten Reglers-Zählers (208), und der ständig den Öffnungsquerschnitt des Halses des integrierten Reglers-Zählers (208) überwacht, um die Inbetriebnahme eines pneumatischen Reglers (517) zum Ansteuern der gesteuerten Vorrichtung (510) zum wahlweisen Verringern des Druckes nur dann zu gestaten, wenn der Öffnungsquerschnitt des genannten Halses unter einen vorbestimmten Schwellenwert abgesunken ist.

14. Entspannungsstation nach irgendeinem der Ansprüche 11 bis 13, dadurch gekennzeichnet, daß sie mindestens einen Meßfühler (308) für den Steuerdruck zum Ansteuern des Reglers-Zählers (208), einen Meßfühler (301) für den Stromaufwärts-Druck des Gases, einen Meßfühler (307) für den Stromabwärts-Druck des Gases, einen Meßfühler (311) für die Stromaufwärts-Temperatur des Gases, einen Meßfühler (252, 305) für die Relativlage der Teile (251, 253), die die Düse mit einem Hals mit variablem Querschnitt bilden, und einen Rechner (312) aufweist, und daß der Rechner (312) einerseits Mittel zum Bestimmen des Gasdurchflusses über den integrierten Regler-Zähler (208) hinweg aus Informationen, die von den Meßfühlern für den Stromaufwärts-Druck (301), die StromaufwartsTemperatur (311) und die Relativlage (252, 305) der Teile (251, 253), die die Düse mit einem Hals mit variablem Querschnitt bilden, sowie andererseits zweite Mittel (313) aufweist, um die Tätigkeit des Sicherheitsventils (204) als Funktion des Wertes des errechneten Durchflusses durch die ersten Mittel sowie der Informationen zu steuern, die von den Meßfühlern des Stromabwärts-Druckes (307) und des Steuerdrucks (308) geliefert werden.

15. Entspannungsstation nach irgendeinem der Ansprüche 1 bis 14, dadurch gekennzeichnet, daß die Auslaßöffnung (106; 206) im unteren Verschluß (112; 212) ausgebildet ist, um eine Auslaßöffnung rechtwinklich bezüglich der Einlaßöffnung (102; 202) zu bilden.

16. Entspannungsstation nach irgendeinem der Ansprüche 1 bis 14, dadurch gekennzeichnet, daß die Auslaßöffnung (106; 206) in der Seitenwand (118; 218) des einzigen Gehäuses (110; 210) ausgebildet ist, wobei sie in Linie mit der Einlaßöffnung (102; 202) angeordnet ist.

Fig.1

Fig.2

Fig. 3

Fig. 4

Fig.5

Fig. 6

Fig-7

Fig.8